# FASCICULE DE BREVET EUROPEEN

(11) **EP 2 566 612 B1**
(45) Date de publication et mention de la délivrance du brevet: **30.07.2014**
(21) Numéro de dépôt: 11727204.7
(22) Date de dépôt: 09.05.2011
(51) Int. Cl.: B01F 7/16, B01F 13/00, A47J 43/07

(54) **BATTEUR MELANGEUR A TETE PIVOTANTE**
SCHWENKKOPF FÜR EINEN LEBENSMITTELMIXER
PIVOT HEAD FOOD MIXER

(30) Priorité: 07.05.2010 FR 1053584
(43) Date de publication de la demande: 13.03.2013
(73) Titulaire: Hameur S.A., 2412 Luxembourg (LU)
(72) Inventeur: DE JENLIS, Pascal, F-75008 Paris (FR)
(74) Mandataire: Chauveau, Ariane
(86) Numéro de dépôt international: PCT/FR2011/000280
(87) Numéro de publication internationale: WO 2011/138526

(56) Documents cités:
- DE-B- 1 298 510
- GB-A- 521 735
- US-A- 4 070 711
- US-A- 5 957 578
- US-A1- 2007 195 641
- US-A1- 2009 185 443

## Description

La présente invention se rapporte à un batteur-mélangeur à tête pivotante, notamment destiné à la restauration professionnelle.

Plus particulièrement, la présente invention se rapporte à un batteur-mélangeur comportant notamment un socle et une tête, ledit batteur étant muni d'un système de verrouillage permettant de bloquer la tête en une position de fonctionnement ainsi qu'en au moins une position d'ouverture.

Les batteurs-mélangeurs connus de l'état de la technique peuvent être classés en deux catégories principales. Une première catégorie concerne les batteurs dont la tête et le socle sont entièrement solidaires. Ils sont équipés d'un bol de mélange muni d'un système de déplacement vertical, permettant d'amener ledit bol en position de travail par rapport aux outils et à la tête. Ces machines sont généralement posées au sol et aptes à mélanger de grandes quantités de nourriture.

Une seconde catégorie concerne les batteurs comportant un socle sur lequel est montée une tête pivotante, c'est-à-dire mobile en rotation autour d'un axe horizontal. En cours de fonctionnement de l'appareil, la tête est le plus souvent en position sensiblement horizontale. Ces batteurs sont équipés d'un bol de mélange, généralement maintenu sur le socle par un système de type baïonnette. Ces machines sont généralement posées sur une table et aptes à des travaux précis ou d'appoint.

La mobilité en rotation d'une tête pivotante permet de soulever ladite tête, par exemple jusqu'à une position sensiblement verticale. Une telle position permet de nettoyer aisément le dessous de la tête, de changer facilement les outils de mélange et d'installer ou d'ôter un bol contenant la préparation à mélanger. Pour procéder aux opérations de nettoyage et de changement des outils, il est utile de bloquer la tête en position soulevée par rapport au socle, afin d'éviter que le poids de ladite tête ne l'entraîne brutalement vers sa position de fonctionnement.

Durant le mélange de préparations épaisses telles que des pâtes, l'énergie fournie par le moteur du batteur tend à soulever la tête en la faisant pivoter autour de son axe de rotation. Il est donc utile de bloquer la tête en position de fonctionnement du batteur.

Il est connu de l'art antérieur des systèmes de verrouillage d'une tête de batteur dans plusieurs positions spécifiques, voir par example US 4070711 A1. En plus, le brevet US5957578 décrit un système de verrouillage permettant de bloquer la tête dans trois positions angulaires par rapport au socle, respectivement 0°, 45° et 90°.

Cependant, le système de verrouillage présenté dans le brevet US5957578 met en oeuvre de nombreuses pièces différentes. Il est relativement complexe à démonter et à remonter et sa réalisation est coûteuse.

Au contraire, la présente invention permet de réaliser un système de verrouillage efficace, fiable, peu onéreux et facile à installer sur un batteur-mélangeur.

Un mode de réalisation est donc un batteur-mélangeur selon la revendication 1. Une forme préférentielle de l'invention prévoit donc que ledit batteur soit caractérisé en ce que le système de verrouillage comporte : une biellette et une manette, la manette étant reliée à la biellette par un arbre de rotation monté sur la base, de telle façon que la manette et la biellette se meuvent dans des plans parallèles, perpendiculaires à un axe de rotation dudit arbre ; un galet porté par la biellette, en excroissance par rapport au plan de rotation de la biellette ; une plaque solidaire de la tête et susceptible de se mouvoir dans un plan perpendiculaire à l'axe horizontal de rotation de la tête, la plaque étant munie de fentes accueillant le galet, ces fentes ayant un profil au moins en Π.

L'expression « en Π » signifie qu'une plaque comporte une première fente, reliée par ses extrémités à deux autres fentes, sensiblement perpendiculaires à ladite première fente.

L'expression « profil au moins en Π » signifie que la première fente peut être reliée à plus de deux fentes sensiblement perpendiculaires à ladite première fente. Par exemple, selon une forme de l'invention, une fente a un profil en E, c'est-à-dire que la première fente est reliée à trois autres fentes sensiblement perpendiculaires à ladite première fente.

Par analogie, « profil au moins en E » signifie que la première fente peut être reliée à plus de trois fentes sensiblement perpendiculaires. De telles fentes au profil au moins en E permettent notamment de bloquer la tête en au moins deux positions d'ouverture.

Selon une forme préférentielle de l'invention, la tête est munie de deux plaques qui l'encadrent; deux biellettes, chacune munie d'un galet, coopèrent chacune avec l'une desdites plaques ; lesdites biellettes sont reliées entre elles et à la manette par un arbre de rotation commun, pour emmener de concert les galets de chacune des deux biellettes dans les fentes de chacune des plaques.

De cette manière, un système de verrouillage est situé sur chacune des faces latérales de la tête. Un tel double système est plus stable et plus solide qu'un système simple, qui serait situé sur une seule face latérale de la tête.

L'invention concerne la fixation du bol de mélange sur le batteur-mélangeur. En effet, un autre objet de la présente invention est un batteur-mélangeur comprenant : un socle, ce socle comportant une console apte à recevoir un bol de mélange ; une tête montée mobile en rotation sur le socle selon un axe horizontal ; un bol de mélange ; un système de verrouillage permettant de bloquer la tête en une position de fonctionnement ainsi qu'en au moins une position d'ouverture ; ledit batteur étant caractérisé en ce qu'une partie supérieure du bol de mélange a une forme complémentaire de la forme d'une face supérieure de la console, telle que le bol puisse être posé de manière stable sur la console en étant maintenu par gravité, le batteur-mélangeur comprenant en outre un élément mobile par rapport à la console, une paroi dudit élément ayant une forme complémentaire de celle d'une partie supérieure du bol, de sorte qu'en position de fonctionnement du batteur-mélangeur, le bol soit pincé entre la console et l'élément mobile.

Ainsi, il n'est pas nécessaire de munir le socle d'un élément de fixation, notamment de type pion ou baïonnette, au contact de la partie inférieure du bol. De même, il n'est pas nécessaire d'équiper le bol de mélange d'accessoires ou de forme particulière facilitant son maintien en position horizontale sur le socle. Une telle absence de relief, d'appendices, ou d'extrusion sur le socle et/ou le bol de mélange facilite les opérations de mise en place et de retrait du bol, ainsi que le nettoyage du bol de mélange et de l'appareil.

Selon une forme préférentielle de l'invention, l'élément mobile, ayant pour fonction de pincer le bol en coopération avec la console, est porté par la tête pivotante de l'appareil.

Ainsi, en position de fonctionnement du batteur, le bol est solidement maintenu par la tête, verrouillée en position horizontale. Lorsque la tête est relevée, le bol est libéré de tout système de fixation. Il peut donc être facilement ôté et remis en place.

L'invention sera mieux comprise à la lecture de la description qui suit et à l'examen des figures qui l'accompagnent. Ces dernières sont données à titre indicatif et nullement limitatif de l'invention. Les figures montrent :
- Figure 1 : une perspective cavalière d'un batteur-mélangeur selon un mode de réalisation de l'invention ;
- Figure 2: une vue de profil d'un batteur-mélangeur selon ledit mode de réalisation de l'invention.

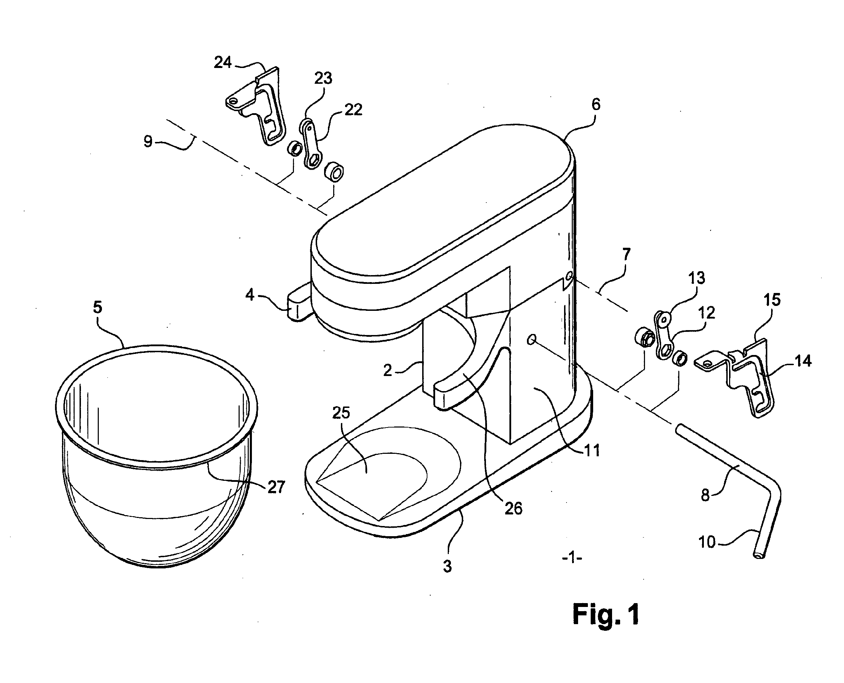

La figure 1 représente une perspective cavalière d'un batteur-mélangeur selon un mode de réalisation de l'invention, avec une vue éclatée du système de verrouillage. Le batteur-mélangeur 1 comporte un socle, notamment formé d'une colonne 2, ladite colonne surmontant une base 3 sensiblement plane et horizontale. Une console 4, fixée à la colonne 2, est apte à recevoir un bol 5 de mélange. Le batteur-mélangeur 1 comporte en outre une tête 6, montée en rotation sur la colonne 2 selon un axe 7 horizontal. Sur la figure 1, la tête 6 est placée en position de fonctionnement.

Selon l'invention, le batteur-mélangeur 1 comporte un système de verrouillage permettant de bloquer la tête 6 en position de fonctionnement ainsi qu'en au moins une position d'ouverture.

Ce système de verrouillage comporte un arbre 8 de rotation, qui traverse de part en part la colonne 2 selon un axe 9 horizontal. Une extrémité de l'arbre 8 est prolongée par une manette 10, sensiblement perpendiculaire audit arbre 8. La manette 10 est fixe par rapport à l'arbre 8 qui est lui-même mobile en rotation. La manette 10 est donc mobile en rotation dans un plan perpendiculaire audit arbre 8. Ce plan est proche d'une surface 11 latérale de la colonne 2.

Une biellette 12 est reliée, par une de ses extrémités, à l'arbre 8. La biellette 12 est une pièce de forme sensiblement rectiligne, perpendiculaire à l'arbre 8. La biellette 12 se déplace dans un plan perpendiculaire à l'arbre 8, ledit plan étant proche de la surface 11 latérale de la colonne 2.

Préférentiellement, la biellette 12 est montée fixe sur l'arbre 8. La manette 10 est donc fixée en angulation rigide par rapport à la biellette 12. Ainsi, lorsqu'un utilisateur actionne la manette 10, la biellette 12 est déplacée en rotation autour dudit arbre 8.

A son extrémité non reliée à l'arbre 8, la biellette 12 est munie d'un galet 13. Ce galet 13 est situé en excroissance par rapport au plan dans lequel se déplace la biellette 12. Dans l'exemple représenté à la figure 1, le galet 13 est situé du côté de la biellette 12 opposé à la colonne 2.

Le galet 13 comporte par exemple un cylindre mobile en rotation par rapport à la biellette 12. Ledit cylindre est prolongé par un disque plat, parallèle au plan dans lequel se déplace la biellette 12.

Le galet 13 est destiné à se déplacer dans des fentes 14 d'une plaque 15, ladite plaque 15 étant montée fixe sur la tête 6. Les fentes 14 sont découpées dans une surface de la plaque 15, ladite surface étant sensiblement parallèle au plan dans lequel se déplace la biellette 12. Les fentes 14 ont une largeur légèrement supérieure au diamètre du cylindre du galet 13 et inférieure au diamètre du disque du galet 13.

Les fentes 14 forment une découpe fermée, c'est-à-dire qu'aucune extrémité desdites fentes ne débouche sur un bord de la surface de la plaque 15. Ainsi, il est impossible de désolidariser la plaque 15 de l'ensemble biellette 12 / galet 13 en déplaçant le galet 13 dans les fentes 14.

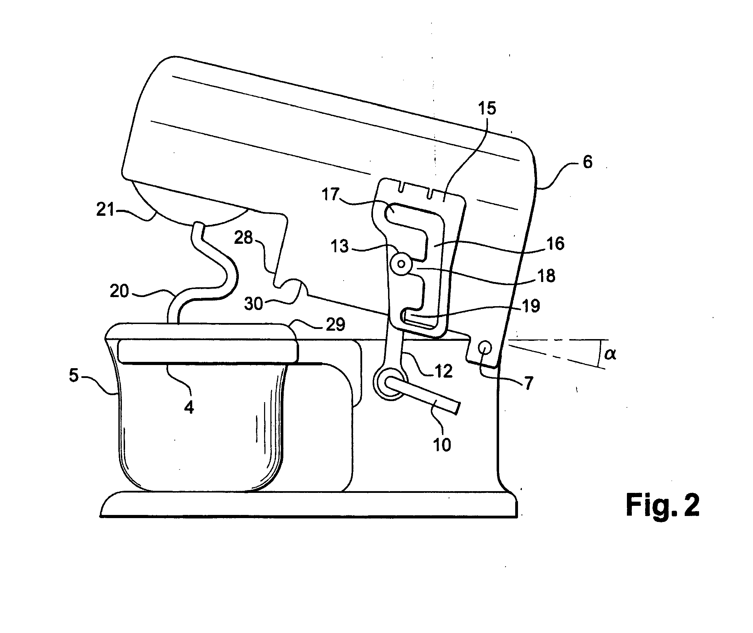

La figure 2 montre une vue de profil du batteur-mélangeur 1 représenté à la figure 1. Le batteur est représenté dans une position intermédiaire d'ouverture.

La position de fonctionnement de la tête 6 correspond à un axe de rotation sensiblement vertical pour un outil 20, monté en rotation sur une partie 21 inférieure de ladite tête 6.

La plaque 15 du système de verrouillage est montée fixe sur la tête 6. La plaque 15 comporte une fente 16 sensiblement rectiligne. En position de fonctionnement du batteur 1, la fente 16 est verticale ou faiblement inclinée par rapport à la verticale. Préférentiellement, en position de fonctionnement du batteur 1, la fente 16 est inclinée par rapport à la verticale d'un angle inférieur ou égal à 30°.

Sur la fente 16 débouchent une extrémité de trois autres fentes (17, 18, 19), lesdites fentes étant sensiblement rectilignes. L'autre extrémité desdites fentes (17, 18, 19) est fermée, c'est-à-dire qu'elle ne débouche pas sur un bord de la surface de la plaque 15. Les fentes 17 et 19 débouchent respectivement à l'extrémité supérieure et à l'extrémité inférieure de la fente 16. La position de la fente 18 intermédiaire est choisie en fonction d'un angle α d'ouverture souhaité de la tête 6. La fente 18 peut par exemple être située à égale distance des fentes 17 et 19.

En position de fonctionnement du batteur 1, les fentes (17, 18, 19) sont sensiblement horizontales. L'ensemble des fentes (16, 17, 18, 19) constitue donc une découpe en forme de E.

On considère que le batteur 1 se trouve dans la configuration représentée à la figure 2. Le galet se trouve dans la fente 18 intermédiaire. Lorsqu'un opérateur actionne d'une main la manette 10 dans le sens horaire, la biellette 12 effectue une rotation qui permet au galet 13 de se déplacer dans la fente 18. Ce déplacement peut être accompagné par une légère rotation de la tête 6 autour de son axe 7.

Lorsque le galet 13 atteint la fente 16, l'opérateur peut par exemple soulever la tête 6 qui pivote autour de l'axe 7. Le galet 13 se déplace alors dans ladite fente 16. De cette manière, il est possible d'engager le galet 13 dans la fente 19. L'opérateur actionne alors la manette 10 en sens anti-horaire, afin de pousser le galet vers l'extrémité fermée de la fente 19. La tête 6 est alors verrouillée en position d'ouverture maximale.

Lorsque le galet 13 atteint la fente 16, l'opérateur peut également abaisser la tête 6 afin d'engager le galet 13 dans la fente 17, ce qui tend à placer la tête 6 en position de fonctionnement. L'opérateur actionne alors la manette 10 en sens anti-horaire, afin de pousser le galet à l'extrémité fermée de la fente 17. La tête 6 est alors verrouillée en position de fonctionnement.

En position de fonctionnement, la tête 6 repose complètement sur la colonne 2. L'angle α d'ouverture, par rapport à l'horizontale, est égal à 0°. Lorsque la tête 6 est verrouillée, le galet 13 est engagé dans la fente 17 la plus haute de la plaque 15.

En position intermédiaire d'ouverture, le galet 13 est engagé dans la fente 18 intermédiaire de la plaque 15. Selon une forme préférentielle de l'invention, l'angle α d'ouverture intermédiaire de la tête 6 est compris entre 30° et 60°. Une telle position d'ouverture est par exemple utile pour ajouter des ingrédients dans le bol 5 de mélange, en cours d'utilisation du batteur 1.

En position d'ouverture maximale, le galet 13 est engagé dans la fente 19 la plus basse de la plaque 15. Selon une forme préférentielle de l'invention, l'angle α d'ouverture maximale de la tête 6 est compris entre 60° et 90°. Une telle position d'ouverture est par exemple utile pour ôter le bol 5 de mélange, changer un outil 20 de battage ou nettoyer une partie 21 de la tête 6 recevant ledit outil 20.

De manière préférentielle, comme représenté sur la figure 1, chaque face 11 latérale du batteur-mélangeur 1 est munie d'un système de verrouillage tel que décrit précédemment. Plus précisément, le batteur 1 comporte une seconde biellette 22, munie d'un galet 23 et montée fixe sur l'arbre 8 de rotation. Le galet 23 est susceptible de se déplacer dans des fentes d'une plaque 24, montée fixe sur la tête 6. Les deux ensembles biellette/plaque, respectivement (12/15) et (22/24), sont symétriques l'un de l'autre par rapport à un plan vertical de symétrie du batteur 1. La rotation de la manette 10 permet le déplacement simultané et symétrique de chaque biellette (12, 22) dans les fentes de la plaque (15, 24) correspondante.

Un tel double système de verrouillage est plus stable et plus solide qu'un système simple. En effet, en position d'ouverture, le poids de la tête 6 est supporté par deux biellettes (12, 22) au lieu d'une seule.

Afin de simplifier les opérations de nettoyage du batteur 1, il est avantageux qu'une surface 25 de la base 3, recevant et supportant le fond du bol 5 de mélange, présente le moins d'aspérités possible. De même, il est avantageux d'éviter la présence, sur la console 4, d'un système complexe de fixation du bol 5.

L'invention prévoit donc qu'une partie supérieure 27 d'une face externe du bol 5 de mélange ait une forme complémentaire de la forme d'une face supérieure 26 de la console. Ainsi, le bol 5 est apte à être posé de manière stable sur la console 4. Lorsque les surfaces 26 et 27 sont en contact, le bol 5 est maintenu en place sur la console 4 par gravité. Les opérations de déplacement et de remise en place du bol 5 sont donc simples et rapides, car ne nécessitant pas l'actionnement d'un système de fixation.

Selon une forme préférentielle de l'invention, les surfaces 26 et 27 sont incurvées. Plus préférentiellement, la surface 26 de la console est de forme convexe ; la partie supérieure 27 d'une face externe du bol 5 a une forme concave complémentaire de ladite forme convexe.

Ces formes incurvées sont avantageuses par rapport à des surfaces (26, 27) sensiblement planes. En effet, les formes incurvées limitent les risques de glissements du bol dans un plan horizontal, en cas de chocs ou de vibrations subis par le batteur 1. De tels glissements pourraient provoquer la séparation du bol 5 et de la console 4, notamment dans le cas d'une console 4 en fer à cheval.

Selon une forme préférentielle de l'invention, une partie de la console 4, apte à recevoir le bol 5 de mélange, a une forme sensiblement en fer à cheval. On entend par fer à cheval une forme ouverte, telle que représentée sur la figure 1. Une telle forme permet de mettre en place et d'extraire le bol, essentiellement par un mouvement de translation horizontale.

Selon l'invention, la tête 6 comporte un élément 28 (figure 2) dont une paroi 30 a une forme complémentaire de celle d'une partie 29 supérieure d'une face interne du bol 5. De cette manière, en position de fonctionnement du batteur-mélangeur 1, le bol 5 est pris en sandwich entre la console 4 et la paroi 30 de l'élément 28. Préférentiellement, l'élément 28 est une partie inférieure de la tête 6. Préférentiellement, la paroi 30 a la forme d'une gorge qui épouse la partie supérieure 29 du bol 5.

Lorsque le batteur 1 est en fonctionnement, la tête 6 est verrouillée par la présence du galet 13 dans la fente 17 supérieure de la plaque 15. La tête 6 ne risque pas de tressauter autour de son axe 7 sous l'effet des vibrations de l'appareil 1. Le bol 5 est donc solidement pincé entre la console 4 et la paroi 30 de l'élément 28. Lorsque le galet 13 est désengagé de la fente 17 et la tête 6 soulevée par l'opérateur, le bol se retrouve libéré de l'élément 28. L'opérateur peut alors facilement ôter le bol 5 de la console 4, sans actionner de système supplémentaire de fixation dudit bol 5.

Selon une autre forme de l'invention, l'élément 28 coopérant avec la console 4 pour pincer le bol 5 peut être indépendant de la tête 6. Il peut par exemple s'agir d'un bras articulé, monté sur la colonne 2, une extrémité dudit bras ayant une forme complémentaire de la partie 29 supérieure du bol 5. Un tel dispositif indépendant de la tête 6 permet de maintenir le bol 5 pincé lorsque ladite tête est en position ouverte, afin par exemple d'effectuer des manipulations à l'intérieur dudit bol 5.

## Revendications

1. Batteur-mélangeur (1) comprenant :
- un socle (2,3), ce socle comportant une console (4) apte à recevoir un bol (5) de mélange ;
- une tête (6) montée mobile en rotation sur le socle selon un axe (7) horizontal,
- un bol de mélange,
- un système (12, 15) de verrouillage permettant de bloquer la tête (6) en une position de fonctionnement ainsi qu'en au moins une position d'ouverture,
**caractérisé en ce qu'**une partie supérieure (27) d'une face externe du bol de mélange a une forme complémentaire de la forme d'une face (26) supérieure de la console, telle que le bol puisse être posé de manière stable sur la console en étant maintenu par gravité,
- le-batteur-mélangeur comprenant en outre un élément (28) mobile par rapport à la console, une paroi (30) dudit élément ayant une forme complémentaire de celle d'une partie (29) supérieure du bol, de sorte qu'en position de fonctionnement du batteur-mélangeur, le bol soit pincé entre la console et l'élément (28) mobile.

2. Batteur-mélangeur selon la revendication 1, tel que l'élément (28) mobile est porté par la tête (6), de sorte que, lorsque le système (12, 15) de verrouillage maintient ladite tête en position de fonctionnement, le bol soit pincé entre la console et la tête (6).

3. Batteur-mélangeur selon la revendication 2, tel que l'élément (28) porté par la tête (6) comporte une gorge (30) de forme complémentaire de celle d'une partie (29) supérieure du bol.

4. Batteur-mélangeur selon l'une des revendications 1 à 3, **caractérisé en ce que** la partie supérieure (27) d'une face externe du bol de mélange a une forme concave, la face (26) supérieure de la console ayant une forme complémentaire convexe.

5. Batteur-mélangeur selon l'une des revendications 1 à 4, **caractérisé en ce que** qu'une partie de la console (4), apte à recevoir le bol de mélange, a une forme sensiblement en fer à cheval.

6. Batteur-mélangeur selon l'une des revendications précédentes, **caractérisé en ce que** le système de verrouillage comporte :
- une biellette (12) et une manette (10), la manette étant reliée à la biellette par un arbre (8) de rotation monté sur la base, de telle façon que la manette et la biellette se meuvent dans des plans parallèles, perpendiculaires à un axe (9) de rotation dudit arbre,
- un galet (13) porté par la biellette, en excroissance par rapport au plan de rotation de la biellette,
- une plaque (15) solidaire de la tête (6) et susceptible de se mouvoir dans un plan perpendiculaire à l'axe horizontal de rotation de la tête,
la plaque étant munie de fentes (14) accueillant le galet, ces fentes ayant un profil au moins en Π.

7. Batteur-mélangeur selon la revendication 6, **caractérisé en ce que** :
- la tête est munie de deux plaques (15, 24) qui l'encadrent,
- deux biellettes (12, 22), chacune munie d'un galet (13, 23), coopèrent chacune avec l'une desdites plaques,
- lesdites biellettes sont reliées entre elles et à la manette par un arbre (8) de rotation commun, pour emmener de concert les galets de chacune des deux biellettes dans les fentes de chacune des plaques.

8. Batteur-mélangeur selon l'une des revendications 6 à 7, **caractérisé en ce que** la manette est fixée en angulation rigide par rapport à la biellette.

9. Batteur-mélangeur selon l'une des revendications 6 à 8, **caractérisé en ce que** le système de verrouillage permet de bloquer la tête en au moins deux positions d'ouverture, les fentes (16, 17, 18, 19) possédant un profil au moins en E.

## Patentansprüche

1. Küchenmaschine (1), die umfasst:
- einen Sockel (2,3), wobei dieser Sockel eine Konsole (4) enthält, die eine Rührschüssel (5) aufnehmen kann;
- einen über eine horizontale Achse (7) drehbar auf dem Sockel montierten Arm (6),
- eine Rührschüssel,
- ein Verriegelungssystem (12, 15), das es erlaubt, den Arm (6) in einer Arbeitsposition sowie in mindestens einer Öffnungsstellung zu blockieren,
**dadurch gekennzeichnet, dass** ein oberer Teil (27) einer äußeren Seite der Rührschüssel eine Form besitzt, die zu der Form einer oberen Seite (26) der Konsole komplementär ist, so dass die Schüssel stabil auf die Konsole aufgesetzt werden kann und dabei durch die Schwerkraft aufrecht gehalten wird,
Außerdem enthält die Küchenmaschine ein in Bezug zur Konsole bewegliches Element (28), wobei eine Wand (30) dieses Elements eine zu der Form eines oberen Teiles (29) der Schüssel komplementäre Form besitzt, so dass, wenn die Küchenmaschine in Arbeitsposition steht, die Schüssel zwischen die Konsole und das bewegliche Element (28) geklemmt wird.

2. Küchenmaschine nach Anspruch 1, bei der das bewegliche Element (28) vom Arm (6) gehalten wird, so dass die Schüssel, wenn das Verriegelungssystem (12, 15) besagten Arm in der Arbeitsposition hält, zwischen die Konsole und den Arm (6) geklemmt ist.

3. Küchenmaschine nach Anspruch 2, bei der das vom Arm (6) gehaltene Element (28) eine Nut (30) besitzt, deren Form zu der Form eines oberen Teiles (29) der Schüssel komplementär ist.

4. Küchenmaschine nach einem der Ansprüche 1 bis 3, **dadurch gekennzeichnet, dass** der obere Teil (27) einer äußeren Seite der Rührschüssel eine konkave Form besitzt, wobei die obere Seite (26) der Konsole eine dazu komplementäre konvexe Form hat.

5. Küchenmaschine nach einem der Ansprüche 1 bis 4, **dadurch gekennzeichnet, dass** ein Teil der Konsole (4), der dazu dient, die Rührschüssel aufzunehmen, eine Form hat, die eine deutliche Ähnlichkeit mit der Form eines Hufeisens aufweist.

6. Küchenmaschine nach einem der vorhergehenden Ansprüche, **dadurch gekennzeichnet, dass** das Verriegelungssystem umfasst:
- eine Nebenpleuelstange (12) und einen Hebel (10), wobei der Hebel mit der Nebenpleuelstange durch eine Drehwelle (8) verbunden ist, so dass der Hebel und die Nebenpleuelstange sich in parallelen Ebenen bewegen, die zu einer Rotationsachse (9) dieser Welle senkrecht sind,
- eine durch die Nebenpleuelstange getragene Rolle (13), die über die Drehebene der Nebenpleuelstange hinaussteht,
- eine Platte (15), die mit dem Arm (6) fest verbunden ist und sich in einer zur horizontalen Drehachse des Armes senkrechten Ebene bewegen kann,
wobei die Platte mit Schlitzen (14) ausgestattet ist, die die Rolle aufnehmen und diese Schlitze mindestens ein Profil π haben.

7. Küchenmaschine nach Anspruch 6, **dadurch gekennzeichnet, dass**:
- der Arm mit zwei Platten (15, 24) ausgestattet ist, die ihn einfassen,
- zwei Nebenpleuelstangen (12, 22), die beide mit einer Rolle (13, 23) ausgestattet sind, jede jeweils mit einer der Platten kooperieren,
- besagte Nebenpleuelstangen untereinander und mit dem Hebel durch eine gemeinsame Drehwelle (8) verbunden sind, um die Rollen von jeder der zwei Nebenpleuelstangen zusammen in die Schlitze von jeder der Platten mitzunehmen.

8. Küchenmaschine nach einem der Ansprüche 6 bis 7, **dadurch gekennzeichnet, dass** der Hebel im Verhältnis zur Nebenpleuelstange in starrem Winkel befestigt ist.

9. Küchenmaschine nach einem der Ansprüche 6 bis 8, **dadurch gekennzeichnet, dass** das Verriegelungssystem es erlaubt, den Arm in wenigstens zwei Öffnungspositionen zu blockieren, wobei die Schlitze (16, 17, 18, 19) mindestens ein Profil E haben

## Claims

1. Mixer-blender (1) comprising:
- a base (2,3), this base comprising a bracket (4) able to receive a mixing bowl (5);
- a head (6) mounted mobile in rotation on the base according to a horizontal axis(7),
- a mixing bowl,
- a locking system (12, 15) allowing the head (6) to be blocked in an operating position and also in at least one opening position,
**characterized in that** an upper portion (27) of an outer surface of the mixing bowl has a complementary shape to the shape of an upper surface (26) of the bracket, such that the bowl can be placed in a stable way on the bracket by being held in place by gravity,
the mixer-blender also comprising an element (28) that is mobile relative to the bracket, a wall (30) of said element having a complementary shape to that of an upper portion (29) of the bowl such that, in the mixer-blender's operating position, the bowl is clasped between the bracket and the mobile element (28).

2. Mixer-blender according to claim 1, wherein the mobile element (28) is carried by the head (6), such that, when the locking system (12, 15) holds said head in the operating position, the bowl is clasped between the bracket and the head (6).

3. Mixer-blender according to claim 2, wherein the element (28) carried by the head (6) comprises a groove (30) with a complementary shape to that of an upper portion (29) of the bowl.

4. Mixer-blender according to one of claims 1 to 3, **characterized in that** the upper portion (27) of an outer surface of the mixing bowl has a concave shape, the upper surface (26) of the bracket having a complementary convex shape.

5. Mixer-blender according to one of claims 1 to 4, **characterized in that** a portion of the bracket (4), able to receive the mixing bowl, is substantially in the shape of a horseshoe.

6. Mixer-blender according to one of the preceding claims, **characterized in that** the locking system comprises:
- a connecting rod (12) and a lever (10), the lever being linked to the connecting rod by a rotating shaft (8) mounted on the base, such that the connecting rod and the lever move in parallel planes, perpendicular to an axis (9) of rotation of said shaft,
- a roller (13) carried by the connecting rod, projecting relative to the plane of rotation of the link,
- a plate (15) secured to the head (6) and likely to move in a plane perpendicular to the horizontal axis of rotation of the head,
the plate being provided with slots (14) receiving the roller, these slots having a cross-section in at least a n shape.

7. Mixer-blender according to claim 6, **characterized in that**:
- the head is provided with two plates (15, 24) that frame it,
- two connecting rods (12, 22), each provided with a roller (13, 23), each of which cooperates with said plates,
- said connecting rods are linked to each other and to the lever by a common rotating shaft (8), for synchronizing the rollers of each of the two connecting rods in the slots of each of the plates.

8. Mixer-blender according to one of claims 6 to 7, **characterized in that** the lever is fixed in rigid angulation relative to the connecting rod.

9. Mixer-blender according to one of claims 6 to 8, **characterized in that** the locking system makes it possible to block the head in at least two opening positions, the slots (16, 17, 18, 19) having a cross-section in at least an E shape.
